Europäisches Patentamt

European Patent Office

Office européen des brevets

(11) Publication number: 0 214 306
A1

# EUROPEAN PATENT APPLICATION

published in accordance with Art. 158(3) EPC

(21) Application number: 86901516.4

(22) Date of filing: 28.02.86

Data of the international application taken as a basis:

(86) International application number:
PCT/JP86/00102

(87) International publication number:
WO86/05337 (12.09.86 86/20)

(51) Int. Cl.⁴: H 02 P 7/63

(30) Priority: 01.03.85 JP 38918/85

(43) Date of publication of application:
18.03.87 Bulletin 87/12

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KAWADA, Shigeki 3-30-6, 1119-102, Nakayama
Hachioji-shi
Tokyo 192-03(JP)

(72) Inventor: NAKAMURA, Kousei 1-2-8, Asahigaoka
Hino-shi
Tokyo 191(JP)

(74) Representative: George, Sidney Arthur et al,
GILL JENNINGS & EVERY 53-64 Chancery Lane
London WC2A 1HN(GB)

(54) MULTI-PHASE SQUIRREL-CAGE INDUCTION MOTOR.

(57) A variable-speed multi-phase squirrel-cage induction motor which is driven by a variable-frequency power source of ie pulse-width modulation type, which exhibits constant torque charcteristics when it runs at speeds lower than a predetermined rated speed, and which exhibits constant output characteristics when it runs at speeds higher than the predetermined rated speed. The number of series conductors has been selected on the stator side of the motor, so that the motor runs at speeds faster than said predetermined rated speed when the frequency of said variable-frequency power source is increased to be higher than a commercial frequency. Therefore, the output can be increased without changing the external size of the motor.

FIG. 7

0214306

## DESCRIPTION

### TITLE OF THE INVENTION
Polyphase Squirrel Cage Type Induction Motor

### TECHNICAL FIELD

The present invention relates to a polyphase squirrel cage type induction motor and, more particularly, to a polyphase squirrel cage type induction motor which can be operated up to a high speed range of, e.g., 10,000 rpm or higher, by a pulse width modulation type variable frequency power source, and is mounted on the main shaft of a machine tool to be used as a spindle motor for cutting operations. Note that this type of induction motor has a very high-speed operating range and, hence, a winding type motor is not used.

### BACKGROUND ART

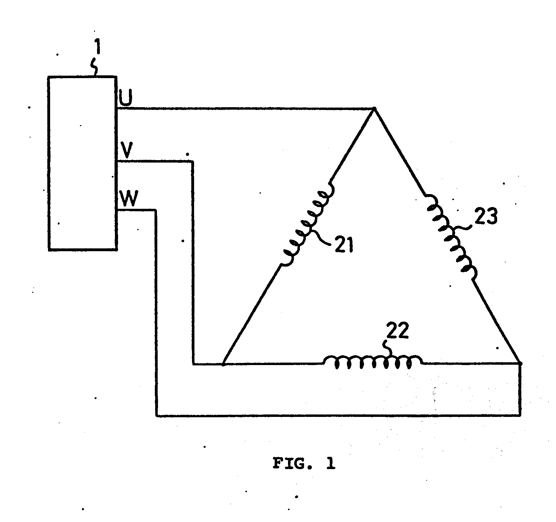

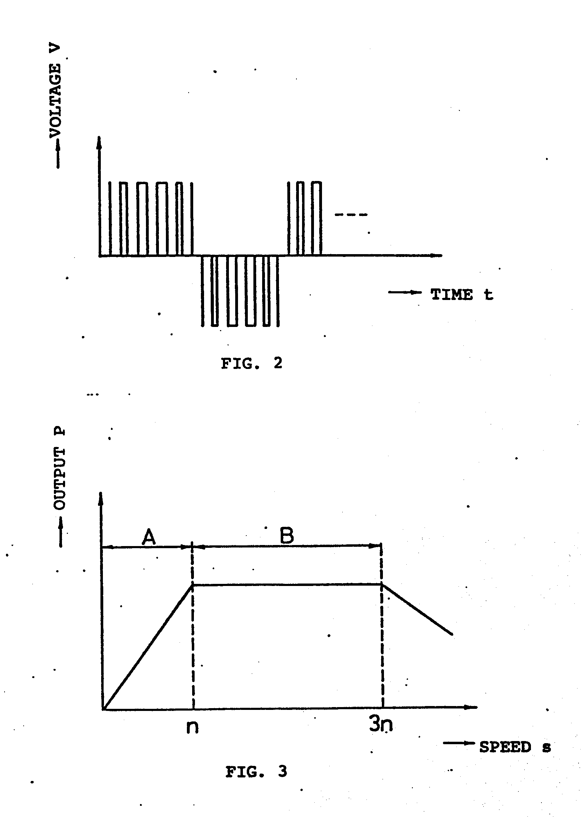

Figure 1 shows an example of connections between a polyphase squirrel cage type induction motor used in such an application (generally, a three-phase squirrel cage type induction motor) and a drive power source 1. Reference numerals 21, 22, and 23 denote stator windings for each phase of the induction motor. Predetermined connections are made between each of the output terminals U, V, and W of the drive power source 1. In this case, as the drive power source 1, an inverter having a waveform of a pulse width modulation type, as shown in Fig. 2, obtained by using an ON/OFF operation of a transistor and generating an output voltage having a variable frequency, is normally used. The induction motor can be driven by this inverter within a speed range of several tens of revolutions per minute to several thousands of revolutions per minute.

Figure 3 shows speed-output characteristics of the three-phase squirrel cage type induction motor driven by the variable frequency power source. In range A, the output of the motor increases proportionally as the frequency of the drive power source is increased and the speed of the motor is increased. Note that, in this range, the magnetic flux $\phi$ per pole and the motor torque are substantially constant, and a primary induction voltage $E_1$ of the motor determined by following relationship increases in a substantially linear manner:

$$E_1 = 2.22K_1 \cdot f \cdot \phi \cdot N_1 \qquad \ldots (1)$$

(where $K_1$ is the winding coefficient, f is the frequency, and $N_1$ is the number of series-connected conductors of each of the stator windings 21, 22, and 23)

In this manner, when the speed of the motor has reached n (normally, 1,500 rpm in a four-pole motor), the primary induction voltage $E_1$ reaches a terminal voltage (e.g., 200 V) applied to the motor, and can no longer be increased.

Therefore, in range B wherein the speed of the motor exceeds the speed n, the excitation current and the magnetic flux $\phi$ decrease upon an increase in power source frequency f. In range B, the torque of the motor decreases upon an increase in speed, but the output thereof becomes substantially constant regardless of the increase in speed, so that the motor exhibits constant output characteristics.

When the rotational speed of the motor exceeds 3n, the rate of decrease of the motor torque becomes more noticeable, and the output of the motor decreases upon an increase in speed.

The speed (i.e., the speed n in Fig. 3) (in other words, the speed obtained when the power source frequency is gradually increased and the primary induction voltage $E_1$ of the motor reaches a terminal voltage applied to the motor, e.g., 200 V), at which the above speed-output characteristics is changed from A range, i.e., the constant torque range, to B range, i.e., the constant output range, is normally known as the base speed of the motor.

As described above, in the squirrel cage type induction motor of this type, until the rotational speed reaches the base speed of the motor, the output of the motor increases in proportion to the speed. After the speed has reached the base speed, however, the output becomes constant regardless of an increase in speed.

Conventionally, the output of the motor of this type is determined in accordance with the outer dimensions thereof. In this case, the speed n (e.g., 1,500 rpm in a four-pole motor) of the motor when the frequency of the variable frequency power source is a commercial frequency is normally set to be the base speed. Therefore, it has not been heretofore proposed to arbitrarily increase the output of the motor of this type having a predetermined outer shape.

DISCLOSURE OF THE INVENTION

It is, therefore, an object of the present invention to produce a larger output than a conventional motor, with a motor having the same dimensions (including the outer and inner shapes) as that of the conventional motor, by selecting the number of series-connected conductors on a stator side of the motor in such a manner that a speed of the motor when the frequency of a variable frequency power source is higher than a commercial frequency becomes equal to the base speed (that is, if the motor has the same dimensions as those of the conventional motor, the number of the series-connected conductors is decreased compared to that of the conventional motor).

In order to solve the above problem, according to the present invention, there is provided a variable speed polyphase squirrel cage type induction motor driven by a pulse width modulation type variable frequency power source, the motor having a constant torque characteristic in a speed range lower than a predetermined base speed and a constant output characteristic in a speed range higher than the base speed, wherein the number of series-connected conductors on the stator side of the motor is selected in such a manner that a speed of the motor becomes equal to the base speed when the frequency of the variable frequency power source becomes higher than a commercial frequency.

With the above arrangement, since the number of series-connected conductors of the stator windings accommodated in slots having a predetermined shape is smaller than that of the conventional motor of the same dimensions, a current flowing through the motor increases, and the base speed in the speed-output characteristics of the motor also increases, thus increasing the output of the motor.

BRIEF DESCRIPTION OF THE DRAWINGS

Figure 1 is a diagram showing an example of connection between a triphase squirrel cage type induction motor used in this application and a drive power source;

Fig. 2 is a diagram showing an example of an output voltage waveform of a variable frequency power source for driving the induction motor of this type;

Fig. 3 is a diagram showing speed-output characteristics of the conventional induction motor driven by the variable frequency power source;

Fig. 4 is a diagram for explaining the relationship between output and current with respect to a speed of the induction motor of this type;

Fig. 5 is a diagram for explaining the relationship between a torque, output, and loss with respect to the speed of the induction motor of this type;

Figs. 6(a) and 6(b) are diagrams showing states wherein four and two (i.e., the number of series-connected conductors is reduced to 1/2) conductors are accommodated in slots having the same shape in the induction motor of this type, respectively;

Fig. 7 is a diagram comparing speed-output characteristics of a motor I according to an embodiment of the present invention and a conventional motor II; and

Fig. 8 is a diagram showing the relationship between the speed and loss in the motor I according to the embodiment of the present invention and the conventional motor II.

BEST MODE FOR CARRYING OUT THE INVENTION

An embodiment of the present invention will be described hereinafter in detail.

Assuming that the outer dimensions of the induction motor are given by πD x L (where D is an outer diameter of the motor, and L is an axial length thereof), a yoke width required for passing a predetermined magnetic flux through the stator side, the outer diameter of a rotor, and sectional areas of slots arranged on the rotor and stator sides are determined based on an allowable magnetic flux density (e.g., 20 Kilo Gauss) of a core material constituting the motor.

If the value of the base speed of the motor is determined, the number $N_1$ of series-connected conductors on the stator side of the motor is given by:

$$N_1 = E_1/(2.22K_1 \cdot f \cdot \phi) \quad\quad ... (2)$$

(where $E_1$ is the primary induction voltage, which is equal to a terminal voltage, e.g., 200 V, applied to the motor at the base speed, and f is the frequency of the drive power source corresponding to the base speed, which is equal to P/120 x (base speed) if the number of poles of the motor is given by P).

If the number $N_1$ of series-connected conductors is determined in this manner, since the sectional areas of the slots on the rotor and stator sides are determined, a primary resistance $r_1$ and a primary leakage reactance $x_1$ of the motor, and a secondary resistance $r_2$ and a secondary leakage reactance $x_2$ on the squirrel cage type rotor side, are determined. More specifically, when the outer dimensions of the motor and the base speed are determined, respective constants, i.e., the primary resistance $r_1$ , the

primary leakage reactance $x_1$ , the secondary resistance $r_2$ , and the secondary leakage reactance $x_2$ of the motor are determined. Therefore, the equivalent circuit of the motor is determined, and currents flowing through the equivalent circuit are also determined.

The relationship between a primary current $I_1$ and a secondary current $I_2$ of the induction motor having the speed-output characteristics shown in Fig. 3 and the speed of the above motor will be next considered.

In this case, the torque until the rotational speed of the motor reaches the base speed n (in the range A) is given by $T_1$ ,

$$T_1 \propto B \cdot I_2 \cdot \ell \times R \qquad \qquad \dots \text{(3)}$$

(where B is the magnetic flux density, $I_2$ is the secondary current, $\ell$ is the total length of the series-connected conductors, and R is the outer diameter of the rotor).

In this connection, since the magnetic flux density B and the conductor length $\ell$ are constant values, the secondary current $I_2$ for producing the constant torque $T_1$ becomes constant in the A range. Therefore, if an excitation current is neglected, the primary current $I_1$ also becomes constant.

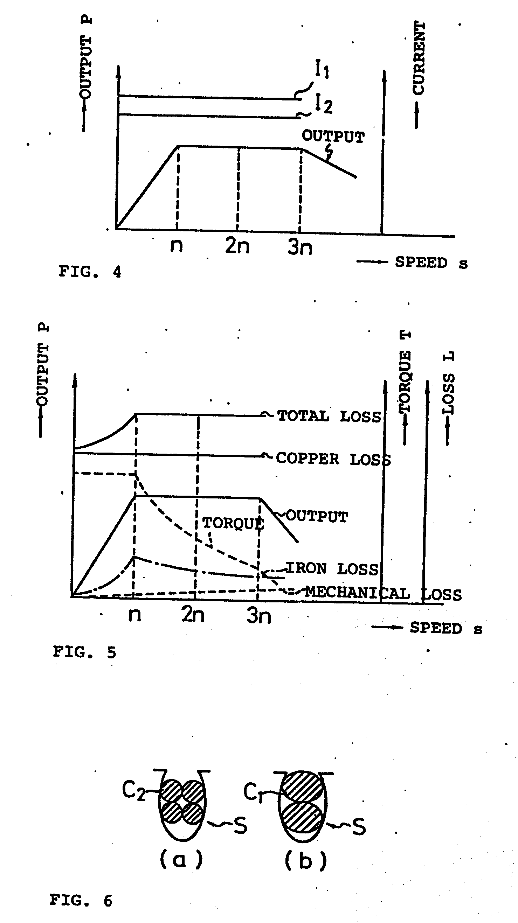

When the rotational speed of the motor exceeds the base speed n (enters the B range), the magnetic flux $\phi$ (magnetic flux density B) and, similarly, the motor torque, decrease upon an increase in speed. Nevertheless, the secondary current $I_2$ given by the relationship (3) has the same value as at the base speed, and the primary current $I_1$ also exhibits the same value. The above relationship is as shown in Fig. 4.

Losses occurring in the motor will be considered. As described above, when the primary and secondary resistances and the primary and secondary currents are determined, the copper loss is constant regardless of the speed of the motor. Meanwhile, since the iron loss

is expressed by $(\alpha f + \beta f^2)B^2$ (where $\alpha$ and $\beta$ are constants), the iron loss increases upon the increase in speed (i.e., an increase in drive power source frequency f) in a constant magnetic flux range (i.e., the magnetic flux density B is constant) until the motor speed reaches the base speed n. In a range in which the motor speed exceeds the base speed n and the magnetic flux gradually decreases, the iron loss decreases upon the increase in speed. Note that a mechanical loss gradually increases upon the increase in speed. Therefore, the relationship between these losses and the total loss, and the motor speed, is as shown in Fig. 5. In this way, when a motor having given outer dimensions has the speed-output characteristics shown in Fig. 5, the total loss thereof becomes substantially constant regardless of the motor speed, and an increase in temperature of the motor is proportional to a value obtained by dividing the total loss with the motor outer dimensions (in other words, they correspond to a motor weight and determine the heat capacity thereof).

To summarize, when the outer dimensions and the base speed of the motor are determined, the respective constants ($r_1$ , $r_2$ , $x_1$ , and $x_2$) of the motor are determined, and an allowable loss is determined based on the outer dimensions (corresponding to the heat capacity) and an allowable upper-limit temperature of the motor. When the allowable loss is determined, the primary and secondary currents are determined, and then the output is determined.

In a conventional motor in which the speed n (1,500 rpm in a four-pole motor) of the motor, which has predetermined outer dimensions (an outer diameter D and an axial length L) and uses a commercial frequency as a power source frequency, is selected to be the base speed, assuming that the number of series-connected conductors for each phase on the stator side of the motor is given by $N_1$ , in the present invention, the number of series-connected conductors is selected to be smaller than that of the conventional motor having the same outer dimensions (e.g., $1/2 \times N_1$) and the base speed is selected to be higher than that of the above conventional motor (e.g., 2n).

Since the motor having the base speed 2n (referred to as motor I hereinafter) has half the number of series-connected conductors of the conventional motor having the base speed n (referred to as motor II hereinafter), the sectional area of a conductor $C_1$ accommodated in slot S, as shown in Fig. 6(b), becomes twice that of a conductor $C_2$ accommodated in the above slot, as shown in Fig. 6(a). Note that, in Figs. 6(a) and 6(b), although the numbers of conductors accommodated in the slot S are respectively shown as four and two, a slot actually accommodates, e.g., several tens of conductors.

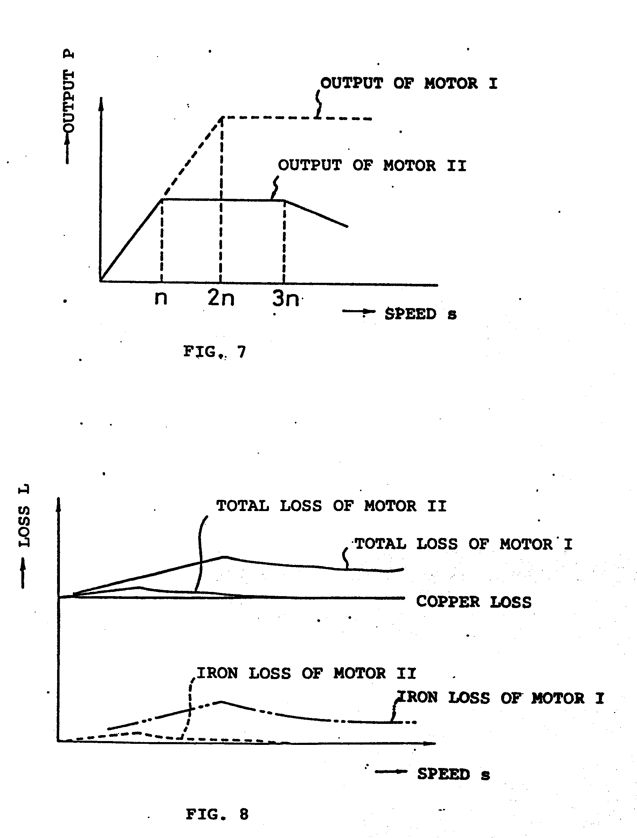

Therefore, if the primary resistance $r_1$ and the secondary resistance $r'_2$ (converted to the primary value) of the motor II are respectively given by $\ell r/Sr$ and $N_1{}^2 r_2$ (where $\ell r$ is the total length of the series-connected conductors, Sr is the sectional area of the conductor, and $N_1$ is the winding ratio), the primary resistance $r_1$ and the secondary resistance $r'_2$ (converted to the primary value) of the motor I can be respectively given by $(\ell r/2)/2Sr$ and $(N_1/2)^2 \times r_2$ , and these values are 1/4 those of the motor II. Therefore, if a copper loss generally determined by $I^2 r$ is constant, in the motor I, twice the primary and secondary currents $I_1$ and $I_2$ of the motor II can flow, and twice the output of the motor II can be obtained. More specifically, when the number of series-connected conductors is selected to be $\frac{1}{2} \times N_1$ , the output of the motor I can be twice that of the conventional motor II having the same dimensions (see Fig. 7). Note that, since the base speed of the motor I is 2n, the iron loss of the motor I increases more than that of the motor II at about the base speed 2n, and accordingly, the total loss of the motor I as a sum of the iron loss and the copper loss is slightly increased over that of the motor II (see Fig. 8). However, if the speed exceeds 2n, since the magnetic flux density B decreases, the iron loss is negligible.

As described above, by changing the number of series-connected conductors on the stator side, the desired power can be produced without changing the outer dimensions of the motor. Namely, according to the present invention, the number of series-connected conductors on the stator side of the motor is selected in such a manner that the speed of the motor when the frequency of the variable frequency power source is selected to be higher than the commercial frequency becomes equal to the base speed (i.e., the number of series-connected conductors on the stator side of the motor is smaller than that of the conventional motor). As a result, the base speed can be larger than that of the conventional motor, and accordingly, a larger output can be derived without changing the dimensions, compared with the conventional motor.

In the conventional motor of this type, the base speed is selected to be 1,500 rpm for a four-pole motor (3,000 rpm for a two-pole motor). Contrary to this, in the motor of the present invention, the base speed is preferably selected to fall within the range of 3,000 rpm to 4,500 rpm for the four-pole motor (the number of series-connected conductors is 1/2 to 1/3 that of the conventional motor). If the base speed is further increased, a problem of wear in a cutter still remains in an actual cutting operation. when the number of series-connected conductors is reduced, the current flowing through the motor increases, as described above. Therefore, in order to produce the increased output from the motor, the motor must be combined with a drive power source having a current capacity corresponding to the increased output.

In the motor I (in which the number of series-connected conductors is reduced to half that of the conventional motor II having the same dimensions and the base speed thereof is doubled), the total loss is slightly increased due to an increase in iron loss when compared with the motor II. Therefore, if this increase is not negligible, the primary current $I_1$ can be increased 1.8 times instead of two times (the output also becomes 1.8 times), so that the total loss including the copper loss can be the same as that of the motor II.

As shown in Fig. 3, in the speed-output characteristics of the conventional motor of this type, when the speed of the motor exceeds 3n (three times the base speed), the output is gradually reduced. This means that when the motor speed exceeds about 3n, the value of $(x_1 + x'_2)^2$ increases and the output is reduced in the following relationship regarding the maximum output in an induction motor:

$$Pm = \frac{m_1 V_1^2}{2\{(r_1 + r'_2) + \sqrt{(r_1 + r'_2)^2 + (x_1 + x'_2)^2}\}}$$

(where $m_1$ is the number of phases).

In this respect, in the motor I of the present invention (the base speed is 2n), since the number of series-connected conductors is half that of the conventional motor II (the sectional area of each conductor is doubled), the resistances and reactances $r_1$, $r'_2$, $x_1$, and $x'_2$ become 1/4 those of the motor II, and the maximum output Pm becomes four times that of the motor II. Thus, a speed at which the output begins to decrease can be theoretically increased to 3n x 4 = 12n.

According to the present invention, in a polyphase squirrel cage type induction motor driven by a pulse width modulation type variable frequency power source, a larger output than that of the conventional motor can be derived while maintaining the same dimensions as that of the conventional motor.

0214306

## List of Reference Numerals and the Corresponding Name

1 ............ Drive Power Source

21, 22, 23 ... Stator winding for each phase of induction motor

S ............ Slot

$C_1$ , $C_2$ ...... Conductor accommodated in a slot

## CLAIM

1.    A variable speed polyphase squirrel cage type induction motor driven by a pulse width modulation type variable frequency power source, said motor having a constant torque characteristic in a range lower than a predetermined base speed and a constant output characteristic in a range higher than said base speed,

wherein a number of series-connected conductors on a stator side of said motor is selected in such a manner that a speed of said motor becomes equal to said base speed when the frequency of said variable frequency power source becomes higher than a commercial frequency.

FIG. 1

0214306

$\frac{2}{4}$

FIG. 2

FIG. 3

FIG. 4

FIG. 5

FIG. 6

FIG. 7

FIG. 8

International Application No. **PCT/JP86/00102**

## I. CLASSIFICATION OF SUBJECT MATTER (if several classification symbols apply, indicate all)³

According to International Patent Classification (IPC) or to both National Classification and IPC

Int.Cl⁴ H02P7/63

## II. FIELDS SEARCHED

### Minimum Documentation Searched⁴

| Classification System | Classification Symbols |
|---|---|
| IPC | H02P7/36, 7/63, 5/34, H02K17/12 |

### Documentation Searched other than Minimum Documentation to the Extent that such Documents are Included in the Fields Searched⁵

| | |
|---|---|
| Jitsuyo Shinan Koho | 1960 - 1986 |
| Kokai Jitsuyo Shinan Koho | 1971 - 1986 |

## III. DOCUMENTS CONSIDERED TO BE RELEVANT¹⁴

| Category* | Citation of Document,¹⁶ with indication, where appropriate, of the relevant passages¹⁷ | Relevant to Claim No.¹⁸ |
|---|---|---|
| Y | JP, Y, 38-13178 (Fuji Electric Co., Ltd.) 29 June 1963 (29. 06. 63), (Family: none) | 1 |
| Y | JP, A, 50-94430 (Scraggs Power Drives Ltd.) 28 July 1975 (28. 07. 75) & US, A, 3978383 | 1 |

* Special categories of cited documents:¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search³ | Date of Mailing of this International Search Report³ |
|---|---|
| May 15, 1986 (15. 05. 86) | May 26, 1986 (26. 5. 86) |
| International Searching Authority¹ | Signature of Authorized Officer²⁰ |
| Japanese Patent Office | |

Form PCT/ISA/210 (second sheet) (October 1981)